# EUROPEAN PATENT APPLICATION

(11) **EP 1 810 562 A2**
(43) Date of publication of application: **25.07.2007**
(21) Application number: 06126401.6
(22) Date of filing: 18.12.2006
(51) Int. Cl.: A01B 59/043, B60D 1/14

(54) **Quick coupler hitch**

(30) Priority: 23.01.2006 US 337885
(71) Applicant: Deere & Company, Moline, IL 61265-8098 (US)
(72) Inventor: Clement, Brian, Grovetown, GA 30813 (US); Fox, Robert, Appling, GA 30802 (US)
(74) Representative: Löser, Iris

(57) **Abstract**

A quick coupler hitch (10) has a one piece curved tube frame (12), rearwardly projecting upwardly opening hooks (29,30) on each leg (13,14) of the frame, each hook having a latch (31,32) pivotable between an unlocked position and a locked position. A central pivot mechanism (35) is mounted on the curved tube frame and has a shaft (42) with a generally vertical axis. Flexible links (40,41) extend through the curved tube frame between the central pivot mechanism and each of the latches. The central pivot mechanism is manually pivotable about the generally vertical axis of the shaft to retract or extend the flexible links to lock or unlock the latches.

## Description

This invention relates generally a quick coupler hitch comprising a curved frame member with a left leg and a right leg, a top portion between the left and right legs as well as to a tractor comprising such hitch.

Quick coupler hitches have been developed to allow faster attachment of tractor three point hitches to rear mounted implements. Quick coupler hitches may include an inverted U-shape frame attached to a conventional three point hitch. The frame of a quick coupler hitch may have an upper hook and two lower coupling hooks or jaws with a latching and unlatching arrangement to hold the implement hitch pins. To hook up a quick coupler hitch to an implement, the hitch may be lowered and the tractor backed into place near the implement. Then the hitch may be raised with the tractor's hydraulic system so that the upper hook engages the upper pin on the implement. Further lifting causes the weight of the implement to force the implement's lower hitch pins to enter the lower hooks.

A tractor operator may lock each of the latches to secure the implement hitch pins to the lower hooks of a quick coupler hitch. The latches may be spring loaded to the locked or latched position. To lock each latch, the operator must dismount from the operator station or seat to manually operate each of the two locking mechanisms for the two hitch pins of the implement. Similarly, to unhitch an implement from a quick coupler hitch, the tractor operator must get down off the seat to manually release each of the spring loaded latches. Once the latches are released, the quick coupler hitch may be lowered until the implement is on the ground. Then, after the hitch is lowered further, the two lower hooks and the upper hook disengage from the implement and the tractor can be driven away.

US-A-5,303,790 shows a mechanism for the quick engagement of a power take-off of a farm tractor with a driven implement without the need for the operator to leave the tractor. The device is usable with a three point hitch for an implement and includes a spring loaded engagement shaft so that the power take off engagement is delayed until the implement is securely hitched.

Although quick coupler hitches have advantages over conventional three point hitches, an operator cannot reach the handles easily while seated on the tractor. Quick coupler hitches may have two separate handles to operate the latches. The operator must leave the operator station to actuate each handle separately. It is inherently more dangerous for the operator to lock or unlock the hitch if he or she is outside the operator's station. A need exists for a quick coupler hitch having a single point of actuation that an operator can latch or unlatch while seated. There is a need for an improved apparatus and method that will allow a tractor to be hooked up to non-PTO powered Category 1 and/or Category 2 implements.

Quick coupler hitches are cam actuated, requiring the operator to exert a substantial effort to provide the needed force. A need exists for a quick coupler hitch that is easier to operate and requires a lower force to latch or unlatch. There is a need for greater operator safety and ease of use when hooking up a tractor to a rear mounted implement.

Quick coupler hitches include inverted U-shaped frames with square, welded corners. The frames are costly to manufacture because the parts of the frame must be welded together. A need exists for a lower cost quick coupler hitch having fewer parts.

It is therefore an object of the present invention to provide a quick coupler hitch overcoming one or all of these needs respectively.

This object is met according to the invention by the teaching of claim 1 and 10 respectively, while features developing the solution in an advantageous way are set forth in the further claims.

A quick coupler hitch having a curved tube frame may be mounted to a tractor three point hitch. The quick coupler hitch includes flexible linkages within the curved tube frame, the linkages extending between a central pivot mechanism and left and right lower locking latches or lugs. The central pivot mechanism includes a single handle that may be operated from the seat of the tractor.

The quick coupler hitch has a one piece curved tube frame, rearwardly projecting upwardly opening hooks on each leg of the frame, each hook having a latch pivotable between an unlocked position and a locked position. The central pivot mechanism may mounted on the curved tube frame and may have a shaft with a generally vertical axis. Flexible links may extend through the curved tube frame between the central pivot mechanism and each of the latches. The central pivot mechanism may be manually pivotable about the generally vertical axis of the shaft to retract or extend the flexible links to lock or unlock the latches.

The above-mentioned and other features and advantages of this invention, and the manner of attaining them, will become more apparent and the invention will be better understood by reference to the following description of embodiments of the invention taken in conjunction with the accompanying drawings, wherein:
- Fig. 1: is a perspective view of a quick coupler hitch, partially in section, according to one embodiment of the invention.
- Fig. 2: is a perspective view of a quick coupler hitch on a three point hitch according to one embodiment of the invention.
- Fig. 3: is a perspective view of the central pivot mechanism, flexible links, and latches in the locked position of the quick coupler hitch shown in Figs. 1 and 2.
- Fig. 4: is a perspective view of the central pivot mechanism, flexible links, and latches used in the unlocked position of the quick coupler hitch shown in Figs. 1 and 2.

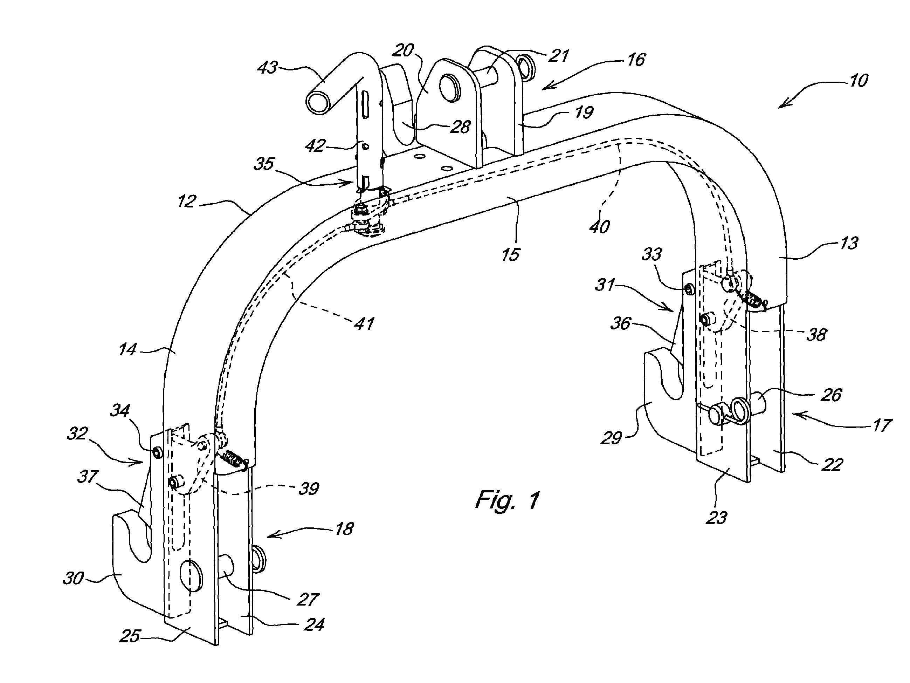

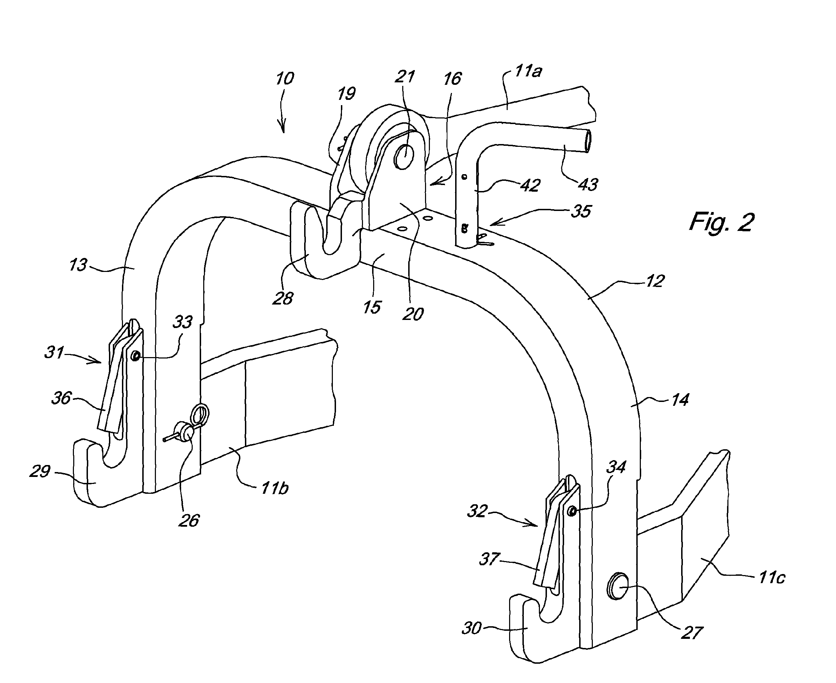

As shown in Figs. 1 and 2, quick coupler hitch 10 may be connected to a three point hitch 11a, 11b, 11c on a tractor or similar vehicle. The quick coupler hitch then may be connected to a rear mounted implement. Quick coupler hitch 10 may include a curved tube frame 12 that can be made by bending a single steel tube into the desired curved or arced shape. The curved tube frame may include left and right legs 13, 14 each of which extends upwardly in a curve or arc to upper or top portion 15. A quick coupler hitch having a curved tube frame according to the present invention has the advantage of simplicity and low cost to manufacture relative to frames for quick coupler hitches that are welded together from two or more steel tubes.

In one embodiment, quick coupler hitch 10 may include upper clevis 16 and left and right lower clevises 17, 18, each of which may be used to attach the quick coupler hitch to three point hitch 11a, 11b, 11c extending from or mounted to the rear of a tractor. Upper clevis 16 may include side-by-side steel plates 19, 20 or a single steel casting that may be generally vertically oriented and welded to the top portion 15 of curved tube frame 12. Lock pin 21 may be removably inserted horizontally through holes in each of plates 19, 20 to lock the upper clevis 16 to the three point hitch. Lower clevises 17, 18 may be integral with curved tube frame 12 on left and right legs 13, 14. Left lower clevis 17 may include a pair of vertically aligned plates 22, 23 and right lower clevis 18 may include a pair of vertically aligned plates 24, 25. Lock pin 26 may be removably inserted horizontally through holes in plates 22, 23 to lock the left lower clevis to a three point hitch. Lock pin 27 may be removably inserted horizontally through holes in plates 24, 25 to lock the right lower clevis to a three point hitch.

In one embodiment, quick coupler hitch 10 may be attached to a rear mounted implement by lowering the hitch and backing up the tractor into place near the implement. Then the quick coupler hitch 10 may be raised with the tractor's hydraulic system so that upper hook 28 engages the upper pin on the implement. Further lifting causes the weight of the implement to force the implement's lower hitch pins to enter lower hooks 29, 30. Upper hook 28 and lower hooks 29, 30 are rearward projecting and upward opening, and may provide load bearing points of attachment for an implement. Upper hook 28 may be welded to quick coupler hitch 10 at or near upper clevis 16, and left and right lower hooks 29, 30 may be welded to the left and right lower portions or legs of the quick coupler hitch 10.

In one embodiment, left and right lower hooks 29, 30 may be latched or unlatched simultaneously. Left and right lower latches or lugs 31, 32 may be pivotably mounted to each of the lower portions or legs of the quick coupler hitch. The left and right lower latches or lugs 31, 32 may pivot on generally horizontal axes 33, 34 to latch or unlatch the hooks.

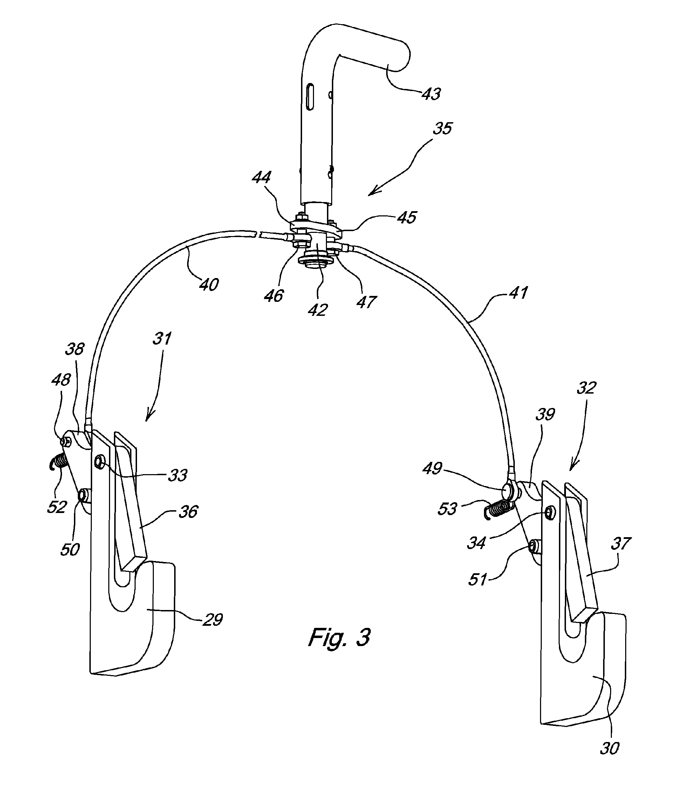

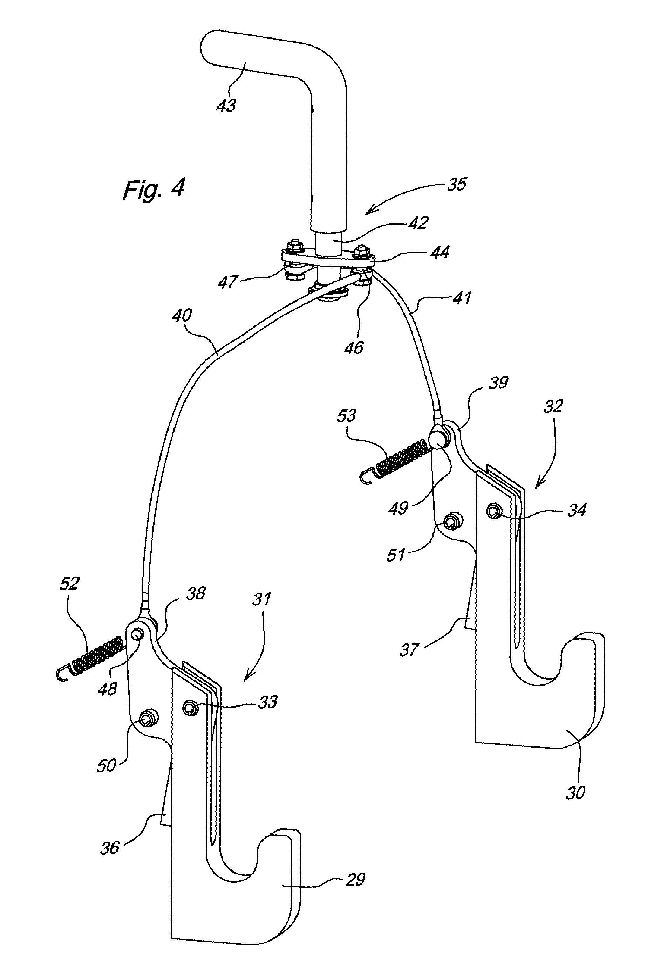

In one embodiment, as shown in Figs. 3 and 4, left and right lower latches or lugs 31, 32 may pivot simultaneously by use of central pivot mechanism 35. Each of the left and right lower latches or lugs 31,32 may have first or lower ends 36, 37 that may extend over the left and right lower hooks in the locked position, and second or upper ends 38, 39 that may be connected to central pivot mechanism 35 through flexible links 40, 41. The horizontal pivot axes 33, 34 of the left and right lower latches or lugs 31, 32 may include pivot pins between the lower and upper ends of the latches or lugs 31, 32.

In one embodiment, flexible links 40, 41 may be wire cables. Flexible link 40 may be inserted through curved tube frame 12 between the left leg 13 and the top 15 of the frame, and flexible link 41 may be inserted through the curved tube frame 12 between the right leg 14 and the top 15 of the frame.

In one embodiment, central pivot mechanism 35 may be manually operated from a seated position on a tractor to simultaneously lock or unlock the left and right lower latches or lugs 31, 32. Central pivot mechanism 35 may include a generally vertically oriented shaft member 42 and a handle 43 extending horizontally from the upper end of the shaft. Shaft member 42 may extend at least partially through the curved tube frame near the top 15 of the frame so that the shaft may pivot on its vertical axis, and one or more bearings may be included between the shaft and frame.

In one embodiment, central pivot mechanism 35 may include a pair of cranks 44, 45 extending radially from the axis of vertical shaft 42 adjacent the lower end of the shaft. Pins 46, 47 may connect the first ends of cables 40, 41 to the cranks, and pins 48, 49 may connect the second ends of the cables to the left and right lower latches or lugs 31, 32. When handle 43 is turned by the operator, cables 40, 41 may be retracted or extended to lock or unlock the left and right lower latches or lugs. Fig. 3 shows the left and right lower latches in the locked position to hold the implement hitch pins. Fig. 4, shows the left and right lower latches in the unlocked position. Pins 50, 51 through the lower latches or lugs may contact the inside wall of the lower portions of the tubular member to limit the pivoting of left and right lower latches or lugs beyond their locked positions. Springs 52, 53 may urge the left and right lower latches or lugs toward their locked positions.

In one embodiment, quick hitch coupler may be operated by turning handle 43 to pivot shaft 42 on its vertical axis to simultaneously retract or extend the wire cables in the bent tube frame. For example, the handle may be rotated between about 45 degrees and about 120 degrees, and most preferably about sixty degrees, to move the lower latches or lugs between their locked and unlocked positions. Through the sixty degrees of rotation, cables 40, 41 may be equally retracted or extended by cranks 44, 45. As the cables are retracted or extended, the attached lower latches or lugs 31, 32 may be pivoted between their locked and unlocked positions.

In one embodiment, central pivot mechanism 35 may have a locking position at the end of the sixty degrees of rotation that allows lower latches or lugs 37, 38 to be held in their unlocked positions. Additionally, when handle 43 is released from the locked position, springs 52, 53 attached to the lower latches or lugs may return them to their locked positions.

Quick hitch coupler 10 may be hooked up to a rear mounted implement by lowering the coupler and backing up the tractor and/or moving the implement into a position where lower hooks 29, 30 are under the left and right hitch pins of the implement, and upper hook 28 is under the upper hitch pin of the implement. After the tractor and implement are properly positioned, the tractor operator may raise the quick attaching coupler sufficiently for the implement's hitch pins to enter hooks 28, 29, 30. The operator may raise the quick attaching coupler by use of a hydraulic system for the tractor's three point hitch, preferably with controls that are accessible from the tractor operator station.

In one embodiment, the present invention provides a method and apparatus for a tractor operator to use a single handle to latch or lock quick hitch coupler 10 to a rear mounted implement after the hitch pins enter hooks 28, 29, 30. The present invention provides a simplified quick hitch coupler that is relatively easy to operate and economical to manufacture.

Having described the preferred embodiment, it will become apparent that various modifications can be made without departing from the scope of the invention as defined in the accompanying claims.

## Claims

1. A quick coupler hitch (10) comprising a curved frame member (12) with a left leg and a right leg (13, 14), a top portion (15) between the left and right legs (13, 14), **characterized by** flexible links (40, 41) having first and second ends extending through the curved frame member (12) between each leg (13, 14) and the top portion (15); rearwardly opening hooks (29, 30) on the left and right legs (13, 14), each hook (29, 30) having a pivotable latch (31, 32); and a handle (43) pivotable with respect to the top portion (15) of the curved frame member (12), a first end of each flexible links (40, 41) attached to the handle (43) and a second attached to one of the pivotable latches, the pivoting movement of the handle (43) retracting or extending the flexible links (40, 41) to lock and unlock both latches (31, 32) simultaneously.

2. The quick coupler hitch according to claim 1, **characterized in that** the flexible links (40, 41) are wire cables.

3. The quick coupler hitch according to claim 1 or 2, **characterized in that** the latches (31, 32) are biased to the locked position preferably by springs (52, 53).

4. The quick coupler hitch according to one or several of the previous claims, **characterized by** a rearwardly opening hook (28) mounted to the top portion of the curved frame member (12).

5. The quick coupler hitch according to one or several of the previous claims, **characterized in that** the handle (43) is pivotable on a vertical axis or a shaft (42) with a generally vertical axis respectively preferably between about 45 degrees and about 120 degrees.

6. The quick coupler hitch according to claim 5, **characterized by** cranks (44, 45) extending radially out from the vertical axis of the shaft (42); each flexible link (40, 41) connected to one of the cranks (44, 45).

7. The quick coupler hitch according to one or several of the previous claims, **characterized in that** the frame (12) is a one piece hollow tubular steel frame.

8. The quick coupler hitch according to one or several of the previous claims, **characterized by** a plurality of clevises (17, 18) attaching the quick hitch coupler (10) to a three point hitch (11 a, 11 b,11 c).

9. The quick coupler hitch according to one or several of the previous claims, **characterized in that** each pivotable latch (31, 32) has an upper end (38, 39) attached to the flexible link (40, 41), a lower end (36, 37) which extends over a rearwardly extending hook in the locked position, and a pivot pin between the upper and lower ends (36, 37, 38, 39).

10. A tractor comprising a quick coupler hitch (10) according to one or several of the previous claims.
